# EUROPEAN PATENT APPLICATION

(11) **EP 3 865 675 A1**
(43) Date of publication of application: **18.08.2021**
(21) Application number: 21154119.8
(22) Date of filing: 28.01.2021
(51) Int. Cl.: F01D 17/16, F01D 9/04, F04D 29/56

(54) **VARIABLE VANE SYSTEM FOR TURBOMACHINE WITH LINKAGE HAVING TAPERED RECEIVING APERTURE FOR UNISON RING PIN**

(30) Priority: 13.02.2020 US 202016790449
(71) Applicant: Honeywell International Inc., Charlotte, NC 28202 (US)
(72) Inventor: MCMURRAY, Jeffrey W., Charlotte, NC 28202 (US)
(74) Representative: Lucas, Peter Lawrence

(57) **Abstract**

A variable vane fluid system for a turbomachine is disclosed with variable stator vanes (202) and a unison actuation structure (204) supported for movement about a longitudinal axis between a first rotational position and a second rotational position to coincidentally rotate the plurality of vanes. The unison actuation structure has a projection (208). The variable vane fluid system further includes an elongate linkage member (210) having a first portion (212) connected to a stator vane and a second portion (214) with an aperture (269) that receives the projection. The aperture includes an inner surface (240) with a tapered inner surface profile and a pinch area (244) to allow the projection to tilt within the aperture as the unison actuation structure rotates between the first rotational position and the second rotational position.

## Description

### TECHNICAL FIELD

The present disclosure generally relates to a variable vane system, such as a variable inlet guide vane (IGV) system for a turbomachine and, more particularly, relates to a variable vane system with a linkage having a tapered receiving aperture for a unison ring pin.

### BACKGROUND

Turbomachine compressors can be used in a variety of applications. For example, some compressors (e.g., axial compressors) may be included in a gas turbine engine. In many cases, compressors may include a rotor and a variable vane system. The variable vane system may include a plurality of vanes that may be selectively actuated to change fluid flow to the rotor.

The loads needed for actuating the vanes may be relatively high, requiring a high-powered and costly actuator. Also, the variable vane system may be susceptible to wear. Furthermore, manufacture of these variable vane systems may be complex, time consuming, and inconvenient.

Accordingly, it is desirable to provide an improved variable vane system, wherein the vanes are actuated efficiently and accurately. Furthermore, it is desirable to provide a more robust variable vane system that is less susceptible to wear. Additionally, it is desirable to provide a variable vane system that can be manufactured in a more efficient manner. Other desirable features and characteristics of the present disclosure will become apparent from the subsequent detailed description and the appended claims, taken in conjunction with the accompanying drawings and the foregoing technical field and background.

### SUMMARY

According to various embodiments, a variable vane fluid system is disclosed for a turbomachine. The variable vane fluid system includes a support structure that defines a longitudinal axis. The variable vane fluid system also includes a plurality of variable stator vanes including a first stator vane. The plurality of variable stator vanes is supported by the support structure for rotational movement for varying fluid flow through the turbomachine. The variable vane fluid system also includes a unison actuation structure supported by the support structure for movement about the longitudinal axis between a first rotational position and a second rotational position to coincidentally rotate the plurality of vanes. The unison actuation structure has a projection. The variable vane fluid system further includes an elongate linkage member having a first portion connected to the first stator vane and a second portion with an aperture that receives the projection. The aperture includes an inner surface with a tapered inner surface profile to allow the projection to tilt within the aperture as the unison actuation structure rotates between the first rotational position and the second rotational position.

Additionally, a method of manufacturing a turbomachine is disclosed. The method includes attaching a plurality of variable stator vanes including a first stator vane to a support structure, including supporting the plurality of stator vanes with the support structure for rotational movement that varies fluid flow through the turbomachine. The method also includes attaching a unison actuation structure with a projection to the support structure, including supporting the unison actuation structure with the support structure for movement about the longitudinal axis between a first rotational position and a second rotational position. Furthermore, the method includes coupling the first stator vane to the projection with an elongate linkage member such that movement of the unison actuation structure between the first rotational position and the second rotational position coincidentally rotates the first stator vane, including attaching a first portion of the linkage member to the first stator vane and receiving the projection in an aperture at a second portion of the linkage member. The aperture includes an inner surface with a tapered inner surface profile to allow the projection to tilt within the aperture as the unison actuation structure rotates between the first rotational position and the second rotational position.

Also provided according to various embodiments is a gas turbine engine with a variable vane system. The variable vane system includes a support structure that defines a longitudinal axis. Furthermore, the variable vane system includes a plurality of variable stator vanes including a first stator vane. The plurality of variable stator vanes is supported by the support structure for rotational movement for varying fluid flow through the gas turbine engine. The variable vane system also includes a unison ring supported by the support structure for movement about the longitudinal axis between a first rotational position and a second rotational position to coincidentally rotate the plurality of stator vanes. The unison ring has a pin that projects away from the longitudinal axis. The variable vane system additionally includes an elongate linkage member with a rigid arm having a first end that is attached to the first stator vane. The elongate linkage member has a bushing that is removably attached to a second end of the arm. The bushing has an aperture that receives the pin. The aperture includes an inner surface with a tapered inner surface profile to allow the pin to tilt within the aperture as the unison ring rotates between the first rotational position and the second rotational position.

### DESCRIPTION OF THE DRAWINGS

The exemplary embodiments will hereinafter be described in conjunction with the following drawing figures, wherein like numerals denote like elements, and wherein:
FIG. 1 is a schematic partially cut-away view of a gas turbine engine that includes a variable vane system according to example embodiments of the present disclosure;
FIG. 2 is a schematic cross-sectional view of the gas turbine engine of FIG. 1, taken along line 2-2 of FIG. 1;
FIG. 3 is a schematic cross-sectional view through the variable vane system and other portions of a compressor section of FIG. 1;
FIG. 4 is a perspective view of a variable vane system of the gas turbine engine of FIG. 1 according to example embodiments;
FIG. 5 is a perspective view of a portion of the variable vane system of FIG. 4 shown in three different positions;
FIG. 6 is a perspective view of a linkage member of the variable vane system of FIG. 4; and
FIG. 7 is a section view of the linkage member taken along the line 7-7 of FIG. 6.

### DETAILED DESCRIPTION

The following detailed description is merely exemplary in nature and is not intended to limit the application and uses. Furthermore, there is no intention to be bound by any expressed or implied theory presented in the preceding technical field, background, brief summary or the following detailed description. In addition, those skilled in the art will appreciate that embodiments of the present disclosure may be practiced in conjunction with any type of compressor, and that the axial compressor described herein is merely one exemplary embodiment of the present disclosure. It should be noted that many alternative or additional functional relationships or physical connections may be present in an embodiment of the present disclosure.

The present disclosure generally relates to a variable vane system with features that allow stator vanes to move efficiently and effectively with relatively low actuating forces. The features reduce wear on the components as well. Furthermore, manufacture of the system can be completed quickly, efficiently, and conveniently.

In some embodiments, the variable vane system of the present disclosure may include linkages that couple stator vanes to a unison actuation structure (e.g., a unison ring). At least one linkage may include an aperture that receives a mating part. The aperture may include a tapered interior surface that allows the mating part to pivot within the aperture as the components rotate about respective axes. Furthermore, in some embodiments, the aperture may be incorporated in a replaceable bushing. The bushing may be made from a high-performance material, such as poly ether ether ketone (PEEK) in some embodiments.

Thus, loads on the bushing and the mating part can be relatively low. Also, these components are less susceptible to wear. Additionally, the system may be manufactured efficiently. Furthermore, repair of the joint between the linkage and mating part is convenient, for example, because the bushings may be replaced easily.

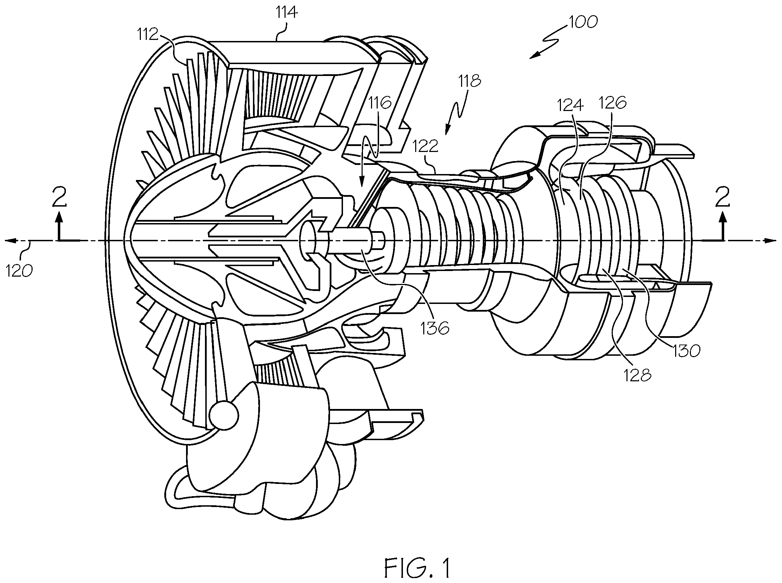

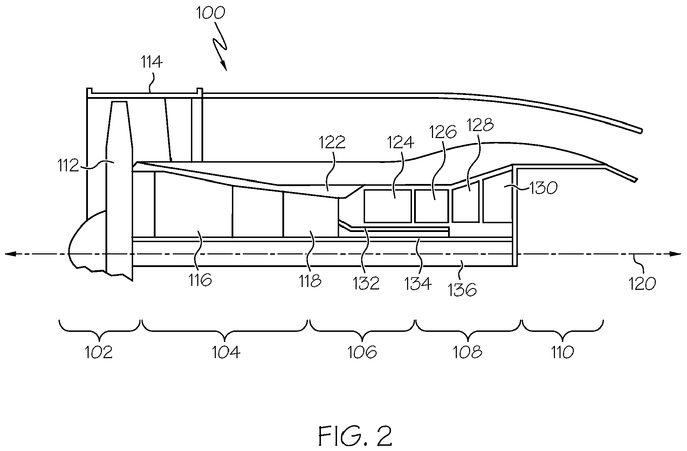

With reference to FIGS. 1 and 2, an exemplary turbomachine, such as a gas turbine engine 100, is shown that is configured to include a variable vane fluid system of the present disclosure. It should be noted that while the variable vane fluid system of the present disclosure is discussed with regard to the gas turbine engine 100, the variable vane fluid system of the present disclosure can be employed with any suitable engine, such as a turbojet engine, a scramjet engine, an auxiliary power unit (APU), or other turbomachine without departing from the scope of the present disclosure.

As shown in the example of FIG. 2, the exemplary gas turbine engine 100 may include a fan section 102, a compressor section 104, a combustion section 106, a turbine section 108, and an exhaust section 110. The fan, combustion, turbine, and exhaust sections 102, 106, 108, 110 can be substantially similar to those of a conventional gas turbine engine; therefore, the fan, combustion, turbine, and exhaust sections 102, 106, 108, 110 will not be discussed in detail herein. It should also be understood that FIGS. 1 and 2 are merely illustrative and may not be necessarily drawn to scale. In addition, while the fluid moving through the engine 100 may be air, it should be noted that the present disclosure is not so limited. Instead, the present disclosure may apply to any turbomachine that receives any suitable fluid.

The fan section 102 includes a fan 112 mounted in a fan casing 114. The fan 112 induces air from the surrounding environment into the engine 100 and passes this air toward the compressor section 104.

The compressor section 104 includes at least one compressor and, in this example, includes a low-pressure (LP) compressor 116 (may also be referred to as an intermediate-pressure (IP) compressor, a booster or T-stage) and a high-pressure (HP) compressor 118. The LP compressor 116 raises the pressure of the air directed into it from the fan 112 and directs the compressed air into the HP compressor 118. The LP compressor 116 and the HP compressor 118 may be axi-symmetrical about a longitudinal centerline axis 120. The LP compressor 116 and the HP compressor 118 are mounted in a compressor casing 122 (i.e., shroud).

Still referring to FIG. 2, the combustion section 106 of the gas turbine engine 100 includes a combustor 124 in which the high-pressure air from the HP compressor 118 is mixed with fuel and combusted to generate a combustion mixture of air and fuel. The combustion mixture is then directed into the turbine section 108. The turbine section 108 includes a number of turbines disposed in axial flow series. FIG. 2 depicts a high-pressure turbine 126, an intermediate pressure turbine 128, and a low-pressure turbine 130. While three turbines are depicted, it is to be understood that any number of turbines may be included according to design specifics. For example, a propulsion gas turbine engine may comprise only a high-pressure turbine and a low-pressure turbine. The combustion mixture from the combustion section 106 expands through each turbine 126, 128, 130, causing them to rotate. As the turbines 126, 128, 130 rotate, each respectively drives equipment in the gas turbine engine 100 via concentrically disposed spools or shafts 132, 134, 136. The combustion mixture is then exhausted through the exhaust section 110.

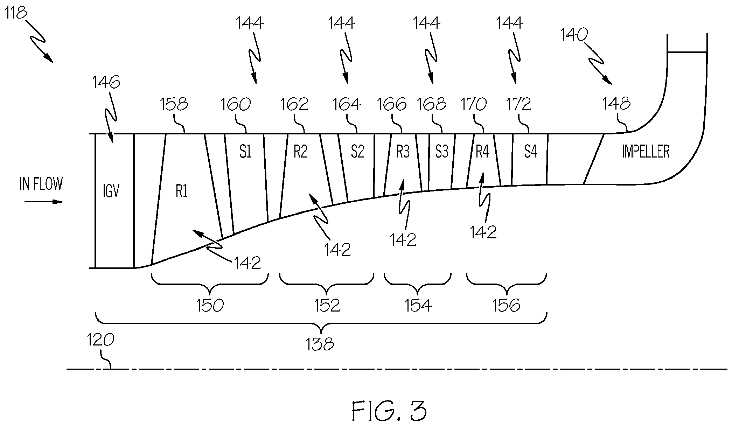

With reference to FIG. 3, a schematic longitudinal sectional view through a portion of the HP compressor 118 is shown. In this example, the HP compressor 118 includes an axial compressor section 138 and a centrifugal compressor section 140. The axial compressor section 138 includes one or more rotors 142 and one or more stators 144. The one or more rotors 142 and the one or more stators 144 are enclosed by the compressor casing 122 (FIG. 2). The axial compressor section 138 may also include an inlet guide vane system (IGV system) 146. The centrifugal compressor section 140 can include an impeller 148 as shown.

With continued reference to FIG. 3, the axial compressor section 138 may include one or more compressor stages spaced in an axial direction along the longitudinal centerline axis 120, with the one or more rotors 142 and the one or more stators 144 cooperating to define a stage. In one example, the axial compressor section 138 comprises a four-stage axial compressor section 138, namely, a first stage 150, a second stage 152, a third stage 154, and a fourth stage 156. It should be noted, however, that the axial compressor section 138 may have any number of stages, and thus, it will be understood that the present teachings herein are not limited to an axial compressor section 138 having four stages.

In this example, the first stage 150 may include a rotor 158 and a stator 160. The rotor 158 may be disposed downstream of the IGV system 146 and may be disposed between the IGV system 146 and the stator 160. The second stage 152 may include a rotor 162 and a stator 164. The rotor 162 may be disposed downstream of the stator 160 and may be disposed between the stator 160 and the stator 164. The third stage 154 may include a rotor 166 and a stator 168. The rotor 166 may be disposed downstream of the stator 164 and may be disposed between the stator 164 and the stator 168. The fourth stage 156 may include a rotor 170 and a stator 172. The rotor 170 may be disposed downstream of the stator 168 and may be disposed between the stator 168 and the stator 172. Also, the stator 172 of the fourth stage 156 may be disposed upstream of the impeller 148 of the centrifugal compressor section 140.

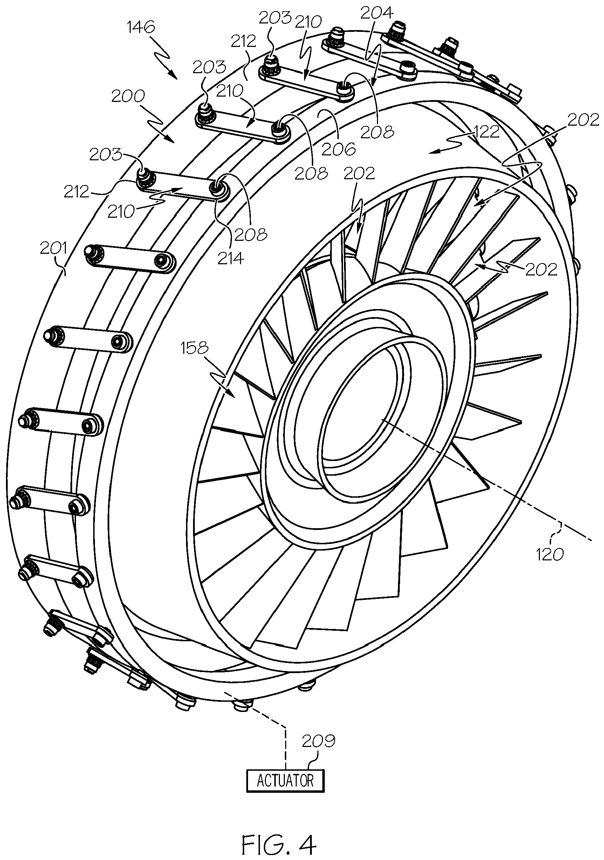

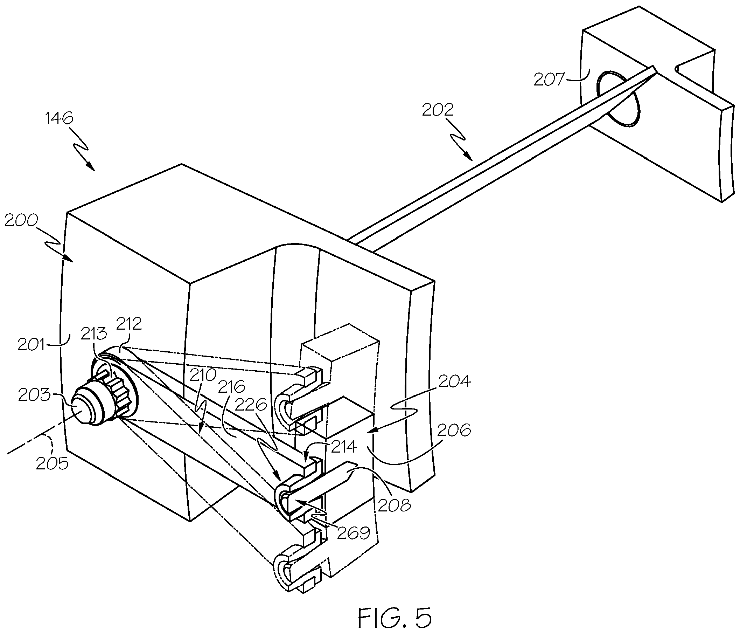

The IGV system 146 will now be discussed in detail with reference to FIGS. 4 and 5. The IGV system 146 may be selectively adjusted to vary the fluid flow to the rotor 158. The IGV system 146 may include one or more features that reduce wear, that provide a robust connection between components, that reduce the input force necessary to adjust the vanes, and/or that facilitate manufacturing. Although these features of the present disclosure are incorporated in the IGV system 146 upstream of the first stage 150 (FIG. 3), it will be appreciated that these features may be incorporated in a variable vane system for any of the stages 150, 152, 154, 156 without departing from the scope of the present disclosure.

The IGV system 146 may include a support structure 200. The support structure 200 may include any number of rigid and strong structures (e.g., rings, brackets, struts, etc.) that support other components of the system 146. In some embodiments, the support structure 200 may include an outer support ring 201 (FIGS. 4 and 5) and an inner support ring 207 (partially shown in FIG. 5). The support rings 201, 207 may both be centered about the centerline axis 120 of the engine 100. The support rings 201, 207 may be fixed to the compressor casing 122 (FIG. 1) or other housing/support structure(s) of the engine 100.

Furthermore, the IGV system 146 may include a plurality of variable stator vanes 202, one of which is shown in FIG. 5. The plurality of vanes 202 may radiate about the axis 120 and may extend between the inner and outer support rings 207, 201. The ends of each vane 202 may be rotatably attached to the inner and outer support rings 207, 201. A vane stem 203 may project outward radially from the respective vane 202 and may extend radially through the outer support ring 201 as shown in FIG. 5. Accordingly, each vane 202 may be supported for rotation about a respective vane axis 205. As shown in FIG. 4, the vanes 202 may be disposed upstream of blades of the rotor 158. Accordingly, movement of the vanes 202 may selectively change fluid flow to the rotor 158 as will be discussed.

Moreover, the IGV system 146 may include a unison actuation structure 204. In some embodiments, the unison actuation structure 204 may include a ring 206 (i.e., a unison ring). The ring 206 may be rigid and strong and may extend annularly about the centerline axis 120. The ring 206 may be supported by the support structure 200 for rotation about the axis 120 between various rotational positions with respect to the axis 120.

Also, the IGV system 146 may include a plurality of projections 208. The projections 208 may radiate and project outward radially from an outer diameter surface of the ring 206. The projections 208 may be spaced equally about the circumference of the ring 206, and the longitudinal axis of the projections 208 may extend normal to the axis 120. As shown in FIG. 5, at least one of the projections 208 may be a pin that is fixed to the ring 206. In some embodiments, one or more of the projections 208 may be press-fit into the ring 206.

The IGV system 146 may further include a plurality of linkages 210. The linkages 210 may respectfully include a first portion 212 that is attached to one of the vane stems 203. As shown in FIG. 5, the first portion 212 may include a fastener 213 (e.g., a stack up of a nut, washer(s), spacer(s), etc.) that attaches the first portion 212 to the end of the vane stem 203 projecting outwardly from the outer support ring 201. The fastener 213 may removably attach the linkage 210 and the vane stem 203 in some embodiments such that the linkage 210 may be removed, repaired, and/or replaced without permanent damage to the components.

The linkages 210 may respectively include a second portion 214 that is attached to the unison actuation structure 204. In some embodiments, the second portion 214 may be attached to respective ones of the projections 208 as shown in FIG. 5. Specifically, the second portion 214 of the linkage 210 may receive the respective projection 208. Accordingly, as will be discussed, rotation of the ring 206 about the axis 120 may, in turn, coincidentally rotate the linkages 210 and vanes 202 about the respective vane axis 205.

As will be discussed, the attachment between the second portion 214 and the projection 208 of the unison actuation structure 204 may be a moveable (i.e., unfixed) attachment. The projections 208 may be somewhat loosely received in the second portion 214 of the linkage 210 such that the projections 208 may tilt or otherwise move relative to the linkage 210. Thus, rotation of the ring 206 may cause the projection 208 to tilt and/or otherwise move slightly relative to the second portion 214 of the linkage 210. Accordingly, the unison actuation structure 204 may be robustly attached to the linkage 210; however, the parts are unlikely to bind, rub, elastically deform, etc. because of the attachment between the linkages 210 and projections 208 of the unison actuation structure 204.

Furthermore, the IGV system 146 may include an actuator 209, which is illustrated schematically in FIG. 4. In some embodiments, the actuator 209 may be a hydraulic linear actuator. The actuator 209 may selectively rotate the unison actuation structure 204 in one or both directions about the axis 120. This movement may coincidentally rotate the linkages 210 and vanes 202 about their respective axis 205. The actuator 209 may also be operatively connected to a control system, such as a computerized control system, which controls actuation of the actuator 209 to thereby control the position of the vanes 202. In some embodiments, the control system may selectively control the actuator 209 (and, thus, selectively position the vanes 202) based on detected engine speed or other operating characteristics of the engine 100.

Referring now to FIGS. 4-7, an exemplary linkage 210 will be discussed according to example embodiments. In some embodiments, the linkage 210 may generally include an arm 216 and a bushing 226 that is removably attached to the arm 216; however, it will be appreciated that the linkage 210 may be a unitary (one-piece) member in other embodiments of the present disclosure.

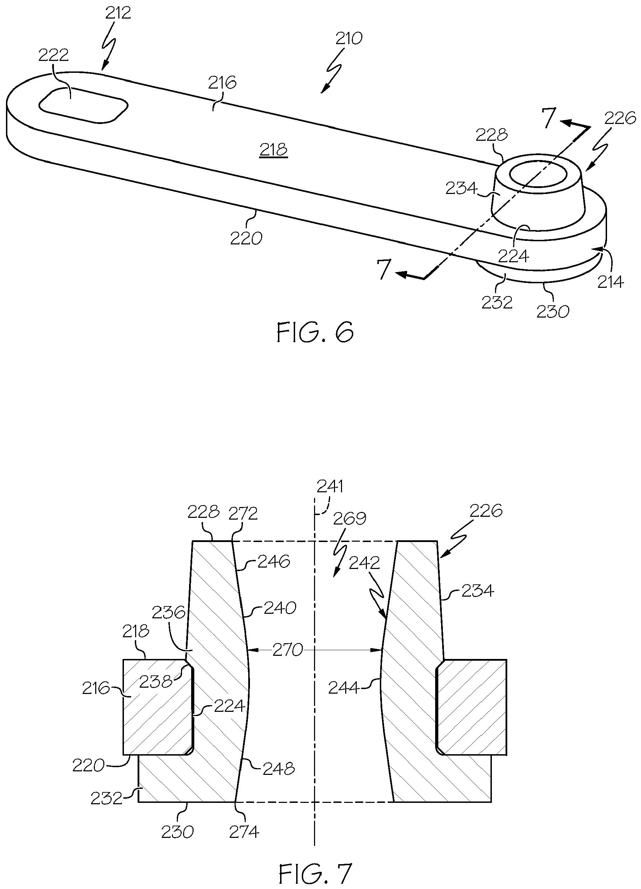

As shown in FIG. 6, the arm 216 may be an elongate, flat, rigid bar. The arm 216 may have a substantially straight longitudinal axis extending between the first and second portions 212 of the linkage 210. The arm 216 may be a stamped sheet metal part in some embodiments. The arm 216 may include a first side 218 and an opposite second side 220. The first side 218 may face radially outboard and away from the axis 120 of the engine 100, and the second side 220 may face radially inboard and toward the axis 120. Also, the arm 216 may include a first hole 222 at the first portion 212 of the linkage 210 and a second hole 224 at the second portion 214 of the linkage 210. The first hole 222 may include at least one flat internal surface and, in some embodiments, may be polygonal. For example, the first hole 222 may be rectangular and elongated slightly toward the second portion 214. The second hole 224 may be a circular hole. Both the first and second holes 222, 224 may be through-holes that extend through the thickness of the arm 216 between the first and second sides 218, 220.

The first hole 222 may receive and attach to the vane stem 203 (via the fastener 213) as discussed above. The flat internal surfaces of the first hole 222 may mate and engage opposing flat surfaces of the vane stem 203 to thereby engage (i.e., rotationally lock) the vane stem 203 and arm 216 for rotation as a unit about the vane axis 205. Also, because the hole 222 is elongated along the axis of the arm 216, the arm 216 may be supported to slide slightly in a direction that is normal to the axis 205 (i.e., along the longitudinal axis of the arm 216).

The bushing 226 may be an annular member. The bushing 226 may be made from a polymeric material, such as polyether ether ketone (PEEK). In some embodiments, the bushing 226 may be formed via a machining process (e.g., turned on a lathe). The bushing 226 may resemble a hollow tube with a first end 228, a second end 230, and an aperture 269 that extends along a straight axis 241 from the first end 228 to the second end 230. The second end 230 may be flared outward so as to include an outwardly extending flange 232. As shown in FIG. 7, an outer surface 234 of the bushing 226 may also include a collar 236 disposed approximately mid-way between the first and second ends 228, 230. The collar 236 may jut outward slightly away from the axis 241 and may be spaced away from the flange 232 along the axis 241. Accordingly, an undercut region 238 may be defined on the outer surface 234 between the collar 236 and the flange 232.

Furthermore, as shown in FIG. 7, the aperture 269 of the bushing 226 may be defined by an inner surface 240. The inner surface 240 may extend between a first rim 272 of the aperture 269 and a second rim 274 of the aperture 269. A width 270 of the aperture 269 (measured normal to the axis 241 between opposite areas of the inner surface 240) may vary along the length of the aperture 269. In some embodiments, the inner surface 240 may taper with respect to the axis 241 such that the width 270 gradually changes along the longitudinal length of the aperture 269. As such, the aperture 269 may have a tapered profile 242 extending between the first rim 272 and the second rim 274 of the aperture 269.

As shown in FIG. 7, the tapered profile 242 may have an hourglass shape. In other words, between the first and second rims 272, 274, the tapered profile 242 may include a so-called pinch area 244 where the width 270 of the aperture 269 is smallest. The pinch area 244 may be disposed approximately mid-way between the first and second rims 272, 274 of the aperture 269. Additionally, the tapered profile 242 may include a first taper 246 where the aperture 269 tapers outward (increases gradually in width) from the pinch area 244 to the first rim 272. Likewise, the tapered profile 242 may include a second taper 248 where the aperture 269 tapers outward (increases gradually in width) from the pinch area 244 to the second rim 274.

The width 270 (diameter) at the pinch area 244 may correspond to the diameter of the projection 208 of the unison actuation structure 204. In some embodiments, these widths (diameters) may be substantially equal, or the pinch area 244 may be slightly wider.

The bushing 226 may be removably attached to the arm 216 as shown in FIGS. 6 and 7. In some embodiments, the bushing 226 may be pressed into the second hole 224 of the arm 216 and may project axially from the first side 218 and the second side 220 of the arm 216. The arm 216 may be snugly received in the undercut region 238 and retained between the collar 236 and the flange 232 of the bushing 226. The second hole 224 may be chamfered at both ends as shown in FIG. 7 such that the bushing 226 is securely retained within the second hole 224. The flange 232 may project axially and radially from the second hole 224 at the second side 220 of the arm 216. Also, as shown in FIG. 7, the pinch area 244 may be disposed axially between the first side 218 and the second side 220 of the arm 216. Also, the projection 208 may be received in the aperture 269 with the pinch area 244 of the bushing 226 encircling the projection 208.

Accordingly, during operation of the engine 100, the actuator 209 may selectively rotate the unison actuation structure 204 between various rotational positions about the axis 120. Rotation of the unison actuation structure 204 coincidentally rotates the linkages 210 and vanes 202 about the respective vane axis 205. Accordingly, the fluid flow to the rotor 158 may be selectively adjusted for enhancing operating efficiency of the engine 100.

FIG. 5 illustrates the IGV system 146 in three positions as examples. A first (intermediate) position is shown in solid lines, a second (open) position is shown in phantom, and a third (closed) position is shown in phantom as well. Because of the tapered profile 242 of the bushing 226, the projection 208 is allowed to tilt freely within the aperture 269. More specifically, in the first position, the axis of the projection 208 may be aligned with the axis 241 of the aperture 269 and both may be normal to the axis 120. In the second position, the axis of the projection 208 may be tilted (misaligned) relative to the axis 241 in one direction. In the third position, the axis of the projection 208 may be tilted (misaligned) in the opposite direction. The bushing 226 may loosely grip the projection 208 at the pinch area 244, but the first and second tapers 246, 248 may provide sufficient clearance for the projection 208 to tilt within the aperture 269. Because the pinch area 244 is disposed between the first and second sides 218, 220 of the arm 216, loads may transfer between the projection 208 and the arm 216 without creating a significant moment. Also, the arm 216 may remain rigid and unflexed during this movement. Furthermore, while there may be some friction between the bushing 226 and the projection 208, these loads are relatively low and resulting wear may be corrected by removing and replacing the bushing 226.

Accordingly, the IGV system 146 may allow for selective adjustment of the vanes 202. Input loads from the actuator 209 may be relatively low because of the tapered profile 242 of the linkages 210. Additionally, wear may be reduced using the IGV system 146 of the present disclosure. Moreover, the IGV system 146 may be manufactured efficiently. The IGV system 146 may be repaired conveniently because the bushings 226 may be removable and replaceable.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing the exemplary embodiment or exemplary embodiments. It should be understood that various changes can be made in the function and arrangement of elements without departing from the scope of the disclosure as set forth in the appended claims and the legal equivalents thereof.

## Claims

1. A variable vane fluid system for a turbomachine comprising:
a support structure that defines a longitudinal axis;
a plurality of variable stator vanes including a first stator vane, the plurality of variable stator vanes supported by the support structure for rotational movement for varying fluid flow through the turbomachine;
a unison actuation structure supported by the support structure for movement about the longitudinal axis between a first rotational position and a second rotational position to coincidentally rotate the plurality of vanes, the unison actuation structure having a proj ection;
an elongate linkage member having a first portion connected to the first stator vane and a second portion with an aperture that receives the projection, the aperture including an inner surface with a tapered inner surface profile to allow the projection to tilt within the aperture as the unison actuation structure rotates between the first rotational position and the second rotational position.

2. The turbomachine of claim 1, wherein the elongate linkage member includes a rigid arm and a bushing that is removably attached to the arm, the bushing including the aperture.

3. The turbomachine of claim 2, wherein the bushing is made of a polymeric material.

4. The turbomachine of claim 2, wherein the arm includes a first side, a second side, and hole that extends from the first side to the second side; and
wherein the bushing is received in the hole and projects from both the first side and the second side.

5. The turbomachine of claim 4, wherein the bushing includes a flange that projects axially and radially from the hole at the first side.

6. The turbomachine of claim 5, wherein the bushing includes a collar that projects outward radially; and
wherein the arm is received between the flange and the collar.

7. The turbomachine of claim 2, wherein the arm includes a first side, a second side, and a hole that extends from the first side to the second side;
wherein the bushing is received in the hole with the inner surface including a pinch area where a width of the tapered inner surface profile is smallest; and
wherein the pinch area is disposed within the hole between the first side and the second side.

8. The turbomachine of claim 1, wherein the aperture includes a first rim and a second rim;
wherein the tapered inner surface profile extends between the first rim and the second rim;
wherein the tapered inner surface profile includes a pinch area where a width of the tapered inner surface profile is smallest; and
wherein the tapered inner surface profile tapers outward in width from the pinch area to the first rim; and
wherein the tapered inner surface profile tapers outward in width from the pinch area to the second rim.

9. The turbomachine of claim 1, wherein the first portion of the linkage member includes an elongate hole with at least one flat internal surface, the elongate hole receiving a vane stem to rotationally engage the linkage member with the vane stem and to allow sliding movement of the linkage member relative to the vane stem.

10. A method of manufacturing a turbomachine comprising:
attaching a plurality of variable stator vanes including a first stator vane to a support structure, including supporting the plurality of stator vanes with the support structure for rotational movement that varies fluid flow through the turbomachine;
attaching a unison actuation structure with a projection to the support structure, including supporting the unison actuation structure with the support structure for movement about the longitudinal axis between a first rotational position and a second rotational position; and
coupling the first stator vane to the projection with an elongate linkage member such that movement of the unison actuation structure between the first rotational position and the second rotational position coincidentally rotates the first stator vane, including attaching a first portion of the linkage member to the first stator vane and receiving the projection in an aperture at a second portion of the linkage member, the aperture including an inner surface with a tapered inner surface profile to allow the projection to tilt within the aperture as the unison actuation structure rotates between the first rotational position and the second rotational position.

11. The method of claim 10, further comprising removably attaching a bushing of the elongate linkage member to a rigid arm of the elongate linkage member, the bushing including the aperture.

12. The method of claim 11, wherein the arm includes a first side, a second side, and hole that extends from the first side to the second side; and
wherein removably attaching the bushing includes receiving the bushing in the hole to project from both the first side and the second side.

13. The method of claim 10, wherein the first portion of the linkage member includes an elongate hole with at least one flat internal surface; and
further comprising receiving a vane stem of the first stator vane within the elongate hole to rotationally engage the linkage member with the vane stem and to allow sliding movement of the linkage member relative to the vane stem.

14. A gas turbine engine with a variable vane system comprising:
a support structure that defines a longitudinal axis;
a plurality of variable stator vanes including a first stator vane, the plurality of variable stator vanes supported by the support structure for rotational movement for varying fluid flow through the gas turbine engine;
a unison ring supported by the support structure for movement about the longitudinal axis between a first rotational position and a second rotational position to coincidentally rotate the plurality of stator vanes, the unison ring having a pin that projects away from the longitudinal axis;
an elongate linkage member with a rigid arm having a first end that is attached to the first stator vane, the elongate linkage member having a bushing that is removably attached to a second end of the arm, the bushing having an aperture that receives the pin, the aperture including an inner surface with a tapered inner surface profile to allow the pin to tilt within the aperture as the unison ring rotates between the first rotational position and the second rotational position.

15. The gas turbine engine of claim 14, wherein the arm includes a first side and a second side;
wherein the bushing projects from the first side and the second side of the arm;
wherein the aperture includes a first rim and a second rim;
wherein the tapered inner surface profile extends between the first rim and the second rim;
wherein the tapered inner surface profile includes a pinch area where a width of the tapered inner surface profile is smallest;
wherein the pinch area is disposed between the first side and the second side of the arm;
wherein the tapered inner surface profile tapers outward in width from the pinch area to the first rim; and
wherein the tapered inner surface profile tapers outward in width from the pinch area to the second rim.
